# EUROPEAN PATENT SPECIFICATION

(11) **EP 2 461 328 B1**
(45) Date of publication and mention of the grant of the patent: **08.07.2015**
(21) Application number: 11172143.7
(22) Date of filing: 30.06.2011
(51) Int. Cl.: G21C 3/326, G21C 3/328, G21C 7/00, G21C 7/04

(54) **Nuclear fuel assembly**
Kernbrennstabbündel
Assemblage de combustible nucléaire

(30) Priority: 06.12.2010 JP 2010271920
(43) Date of publication of application: 06.06.2012
(73) Proprietor: Mitsubishi Heavy Industries, Ltd., Tokyo 108-8215 (JP)
(72) Inventor: Kauchi, Masayuki, Tokyo 108-8215 (JP); Kheradmand, Sorouch, Tokyo 108-8215 (JP); Ogura, Yasuo, Yokohama 220-8401 (JP)
(74) Representative: Intès, Didier Gérard André

(56) References cited:
- EP-A1- 1 093 129
- EP-A1- 1 521 271
- WO-A1-2010/119840
- FR-A1- 2 705 491
- JP-A- 1 250 786
- JP-A- 1 250 794
- JP-A- 2000 284 081
- JP-A- 2001 318 181
- JP-A- 2002 022 871
- US-A- 4 629 599
- DATABASE WPI Week 198625 Thomson Scientific, London, GB; AN 1986-159971 XP002673882, -& JP 61 093984 A (HITACHI LTD) 12 May 1986 (1986-05-12)

## Description

### [Technical field]

The present invention relates to a fuel rod containing burnable poison in fuel assemblies that are loaded in a nuclear reactor core.

### [Background art]

Fuel assemblies with fuel rods containing burnable poisons are currently used when operating a reactor to suppress the excessive reactivity a reactor core can have. The burnable poison is a material having large neutron absorption capability and losing the neutron absorption capability progressively through its neutron absorption reactions. An example of a fuel assembly loaded with a fuel rod containing burnable poison is disclosed in Patent Literature 1. In the fuel assembly disclosed in Patent Literature 1, a first fuel rod with a first content amount of burnable poison and a second fuel rod with another content amount of burnable poison are used. The first and second fuel rods containing the burnable poison are loaded in cells of the fuel assembly, by which the burnable poison is distributed across a plane of the fuel assembly (an axial cross section of the fuel rod). Patent Literature 2 discloses a fuel assembly with fuel rods having different burnable poison content, in particular gadolinium, and providing for a radial gadolinium distribution. Patent Literature 3 discloses a fuel assembly with fuel rods having an axial distribution of burnable poison.

### [Citation List]

### [Patent Literature]

[PTL 1] Japanese Unexamined Patent Application Publication No.2007-512505
[PTL 2] EP 1 521 271 A ¶
[PTL 3] WO 2010/119840 A1

### [Summary of Invention]

### [Technical Problem]

In a pressurized water reactor, nuclear reactions at the axially speaking central portion of a fuel rod are generally higher than those in end portions of the fuel rod at the initial stage of an operation cycle. On the other hand, at a later stage of the operation cycle, because more nuclear reactions took place in the center portion of the assembly than in the end portions, the burnup in the end portions become higher than the burnup in the center portion. Therefore, thermal power in the end portions of the fuel rod in the axial direction tend to be relatively large at the later stage of the operation cycle.

In addition to the above tendency, when using a fuel rod with the burnable poison distributed in a substantially uniform manner in the axial direction, the thermal power in the end portions of the fuel rod become larger in a local manner at the later stage of the operation cycle, because there is a difference in the depletion speed of the burnable poison between the center portion and the end portions of the fuel rod. This phenomenon tends to be severe as the operation cycle becomes long. When considering the influence on a transient change event or an accidental event during operation, undesirable large power peaking may appear. Therefore, when aiming for a long operation cycle, the local increase of the thermal power in the end portions of the fuel rod in the axial direction possibly limits the cycle length.

The fuel rod that contains the burnable poison may also be loaded in boiling water reactors. In boiling water reactors, due to a large water density difference between the upper and lower portions in the axial direction, progress of the nuclear reaction in the upper portion is slower than for the lower portion. To counter that phenomenon, the content rate of burnable poison is set according to the difference in water density between the upper and lower portions of the fuel rod. However, it is not possible for pressurized water reactors to make the power distribution uniform along the axial direction if the distribution of the content rate of the burnable poison done in boiling water reactor is taken.

In view of the above problems, an objective of the present invention is to provide a fuel rod and a fuel assembly that can suppress a local thermal power change by making the power distribution uniform along an axial direction and to achieve high reliability considering the influence on a transient change event or accidental event when operating a reactor.

### [Solution to Problem]

The invention is defined in the appended claims. According to an aspect of the present invention, a fuel rod is loaded in a pressurized water reactor, and the fuel rod contains nuclear fuel and burnable poison for reducing a nuclear reaction of the nuclear fuel. A content rate of the burnable poison is increased from both end portions toward a center portion in an axial direction of the fuel rod.

With this configuration, it is possible to increase the content of the burnable poison contained in the fuel rod in the axial center portion and decrease it in the axial end portions. Therefore, at the initial stage of an operation cycle, the burnable poison suppresses the nuclear reaction more in the center portion where the nuclear reaction is higher than in the end portion where the nuclear reaction is lower. In addition, at a later stage of the operation cycle, since the burnup in the axial end portions is more advanced (due to lower burnable poison content), the thermal power is locally reduced there. This allows making the thermal power uniform in the axial direction. Therefore, in a core loaded with fuel assembly obtained from the above fuel rods, it can be reasonably expected that the local increases of thermal power that can occur when operation cycles are lengthened are suppressed, which allows to obtain a fuel with higher reliability considering the influence of a transient change event or an accidental event during reactor operation. The burnable poison includes gadolinium (Gd), boron (B), erbium (Er), and dysprosium (Dy).

Advantageously, in the fuel rods, the nuclear fuel enrichment can be uniform in the axial direction.

With this configuration, it is possible to obtain a fuel rod with a nuclear fuel having a uniform enrichment in the axial direction.

Advantageously, the fuel rod includes: a main fuel area arranged in a center portion in an axial direction; and a pair of axial blanket areas respectively arranged in both end portions of the main fuel area in the axial direction, each of the axial blanket areas having an enrichment lower than that of the nuclear fuel in the main fuel area. The content rate of the burnable poison is increased from the end portions toward the center portion in the main fuel area in the axial direction.

With this configuration, it is possible to arrange a pair of the axial blanket areas in the end portions of the fuel rod having a nuclear fuel concentration level lower than that of the nuclear fuel in the main fuel area. The pair of axial blanket areas reduces the amount of fissionable material to be used by arranging axial areas in the end portions where the nuclear fuel enrichment is lower. In this case, because the thermal power in the end portions are decreased with respect to the center portion, the thermal power in the center portion becomes relatively large, locally increasing the thermal power. However, because it can be expected that the local increase of the thermal power due to the introduction of the axial blanket areas be suppressed by increasing the content rate of the burnable poison from the end portions toward the center portion in the axial direction in the main fuel area, making it easier to introduce the axial blanket areas.

According to the invention, in the fuel rod, the burnable poison is gadolinium.

With this configuration, because the neutron can be absorbed in a preferred manner by using gadolinium as the burnable poison, it is possible to use a small content rate of the burnable poison in the fuel rod.

According to the invention, the fuel rod includes: a high gadolinium area arranged in the center portion in the axial direction, the high gadolinium area having a high gadolinium content rate; advantageously, a pair of low gadolinium areas respectively arranged in both end portions of the high gadolinium area in the axial direction, each of the low gadolinium areas having a gadolinium content rate lower than the gadolinium content rate of the high gadolinium area. The gadolinium content rate in each of the low gadolinium areas is lower than the gadolinium content rate in the high gadolinium area by 1 wt% to 4 wt%.

With this configuration, because the content rate of gadolinium can be taken appropriately in the high gadolinium area and the low gadolinium area, it is possible to make the thermal power of the pressurized water reactor uniform along the axial direction in a preferred manner.

According to the invention, the fuel rod includes: a high gadolinium area arranged in the center portion in the axial direction, the high gadolinium area having a high gadolinium content rate; advantageously, a pair of low gadolinium areas respectively arranged in both end portions of the high gadolinium area in the axial direction, each of the low gadolinium areas having a gadolinium content rate lower than the gadolinium content rate of the high gadolinium area. A length of each of the low gadolinium areas in the axial direction is within a range of 9% to 25% of a total length of a fuel area containing the nuclear fuel in the axial direction.

With this configuration, because the lengths of the high gadolinium area and the low gadolinium area can be taken appropriately in the axial direction, it is possible to make the thermal power of the pressurized water reactor uniform along the axial direction in a preferred manner.

According to the present invention, a fuel assembly includes the fuel rod of any one of above. The fuel rod includes a first fuel rod with a large total weight of the burnable poison and a second fuel rod with a low total weight of the burnable poison lower than the total weight of the burnable poison of the first fuel rod, and a large percentage of the second fuel rod is loaded on an outer side than the first fuel rod in an orthogonal plane perpendicular to an axial direction.

With this configuration, because the thermal power of the pressurized water reactor can be made uniform in the orthogonal plane as well as in the axial direction of the fuel rod, it is possible to make the thermal power of the pressurized water reactor in a three dimensional manner.

### [Advantageous Effects of invention]

With the fuel rod and the fuel assembly according to the present invention, because the power distribution of the pressurized water reactor can be made uniform along the axial direction even at a later stage of an operation cycle by increasing the content rate of burnable poison from both end portions toward the center portion of a fuel rod in the axial direction, it is possible to lengthen an operation cycle.

### [Brief Description of Drawings]

[FIG. 1] FIG. 1 is a schematic configuration diagram of a fuel assembly according to a first embodiment of the present invention.
[FIG. 2] FIG. 2 is a cross-sectional view of the fuel assembly according to the first embodiment cut along a plane perpendicular to the axial direction of a fuel rod.
[FIG. 3] FIG. 3 is a partially cut-away view of a fuel rod according to the first embodiment.
[FIG. 4] FIG. 4 is a schematic diagram of the fuel rod according to the first embodiment, for explaining a distribution of burnable poison.
[FIG. 5] FIG. 5 is a schematic diagram for explaining a layout of fuel rods with respect to the fuel assembly according to the first embodiment.
[FIG. 6] FIG. 6 is a graph of a comparison of power distribution between a conventional fuel assembly and a fuel assembly in which the fuel rod according to the first embodiment is loaded.
[FIG. 7] FIG. 7 is a schematic diagram of a distribution of burnable poison in a fuel rod according to a modification of the first embodiment.
[FIG. 8] FIG. 8 is a schematic diagram of a distribution of burnable poison in a fuel rod according to a second embodiment of the present invention.

### [Description of Embodiments]

Exemplary embodiments of a fuel rod and a fuel assembly according to the present invention will be explained below in detail with reference to the accompanying drawings. The present invention is not limited to the embodiments. In addition, constituent elements in the following embodiments include those that can be easily assumed by persons skilled in the art or that are substantially equivalent.

### [First embodiment]

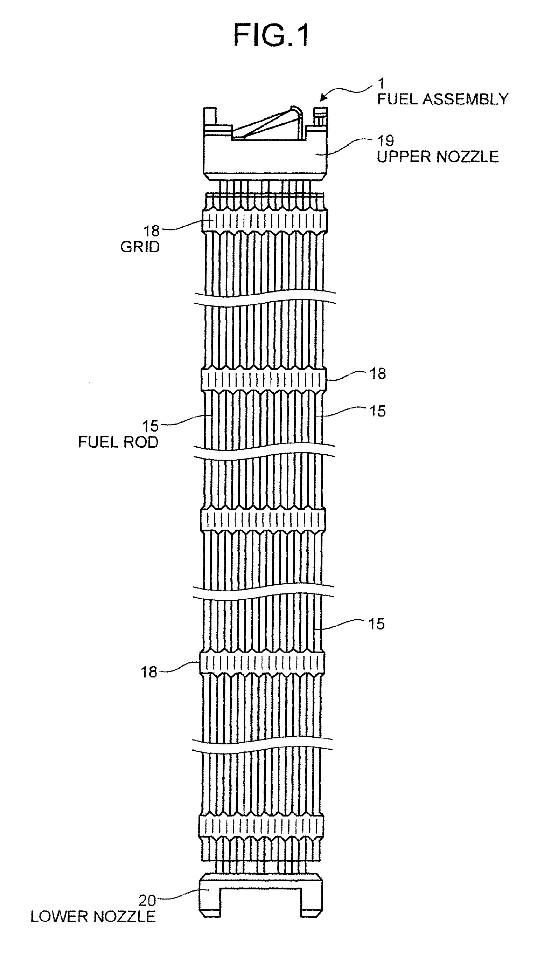

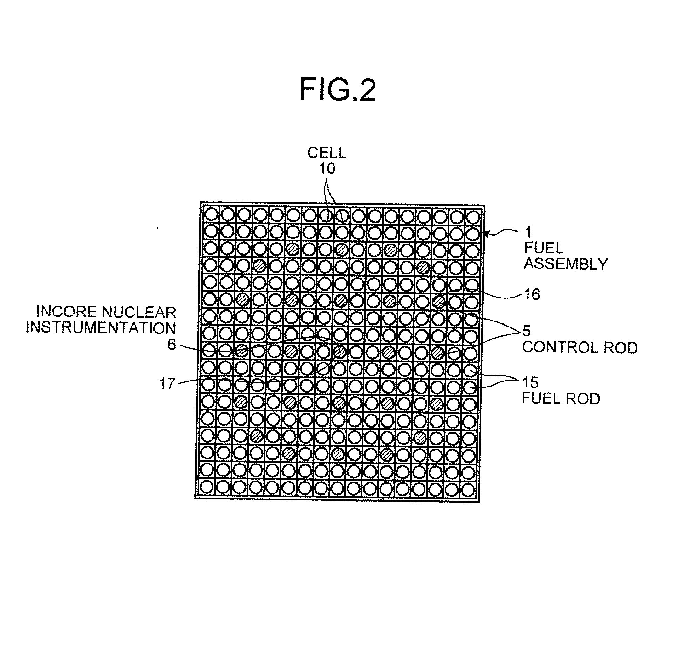

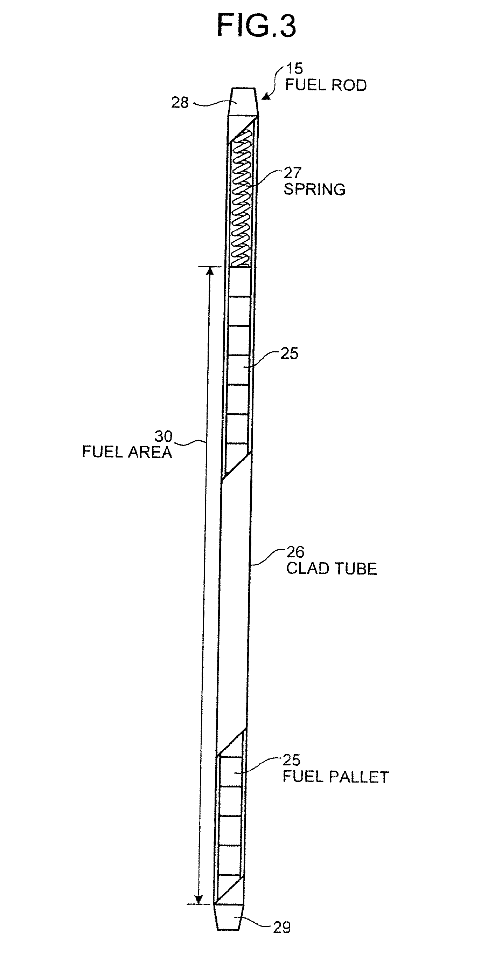

FIG. 1 is a schematic configuration diagram of a fuel assembly according to a first embodiment of the present invention. FIG. 2 is a cross-sectional view of the fuel assembly cut along a plane perpendicular axis to the axial direction of the fuel rod. FIG. 3 is a partially cut-away view of a fuel rod according to the first embodiment.

A fuel assembly 1 according to the first embodiment is loaded in a pressurized water reactor (not shown) in which a reactor is filled with a moderator. The fuel assembly 1 is constituted by 17x17 cells 10, including 264 fuel rods 15 and 24 control-rod guide tubes 16 in which control rods 5 are respectively inserted, an incore-nuclear-instrumentation guide tube 17 in which an incore nuclear instrumentation 6 is inserted, and a grid 18 that bundles all of these components. The fuel assembly 1 further includes an upper nozzle 19 arranged on the upper side of the fuel rods 15 in the axial direction and a lower nozzle 20 arranged on the lower side in the axial direction. The upper nozzle 19 and the lower nozzle 20 respectively fix an upper end portion and a lower end portion in the axial direction of the fuel rods 15, the control-rod guide tubes 16, and the incore-nuclear-instrumentation guide tube 17.

Each of the fuel rods 15 includes a fuel area 30 constituted by a plurality of fuel pellets 25 and a cylindrical clad tube 26 in which the fuel pellets 25 are loaded. Each of the fuel pellets 25 is obtained by making uranium 235 as the nuclear fuel a predetermined enrichment, fusing the uranium 235 to obtain uranium dioxide, and forming the uranium dioxide into a pellet. Although the uranium 235 is used as the nuclear fuel in the first embodiment, the nuclear fuel is not limited to the uranium 235. For example, a fissionable material such as plutonium can be used instead. A predetermined number of the fuel pellets 25 are loaded in the clad tube 26, a spring 27 on the upper side fixes the positions of the fuel pellets 25, and end caps 28 and 29 on the upper side and the lower side are plugged in, thus constituting each of the fuel rods 15.

When the fuel assembly 1 configured in the above manner is loaded in the pressurized water reactor and an operation of the pressurized water reactor is started, the fuel assembly 1 heats the moderator with generated thermal energy while the nuclear reaction is controlled by the control rods 5. At this time, because the inside of the reactor is pressurized, the moderator remains in a liquid phase state along the whole length of the fuel assembly 1 in the axial direction.

In this case, at a later stage of an operation cycle of the pressurized water reactor, the thermal power in both end portions of the fuel assembly 1 in the axial direction are increased while the thermal power in a center portion in the axial direction is decreased, causing a large distortion in the power distribution in the axial direction. For this reason, in the first embodiment, the burnable poison is contained in each of the fuel rods 15 with a predetermined distribution in the axial direction, and these fuel rods 15 are loaded in the fuel assembly 1.

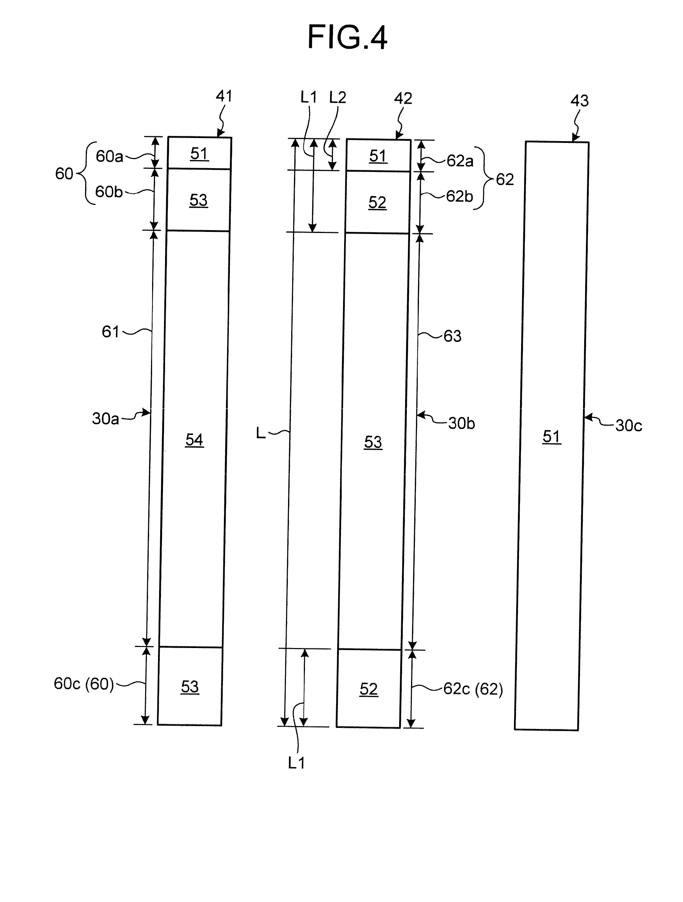

FIG. 4 is a schematic diagram of the fuel rod according to the first embodiment, for explaining a distribution of burnable poison. The fuel rod 15 according to the first embodiment is explained with reference to FIG. 4. In the following descriptions, a case where gadolinium (Gd) is used as the burnable poison is explained as an example.

The fuel rods 15 are divided into three types according to a distribution pattern of the burnable poison, including a first fuel rod 41 that is a high-gadolinium fuel rod, a second fuel rod 42 that is a low-gadolinium fuel rod, and a third fuel rod 43 that does not contain the gadolinium. The fuel area 30 of each of the first to third fuel rods 41, 42, and 43 is constituted by arranging the fuel pellets 25 in the axial direction as shown in FIG. 3, and the fuel pellets 25 include four types in the first embodiment.

The four types of fuel pellets 25 include a first fuel pellet 51, a second fuel pellet 52, a third fuel pellet 53, and a fourth fuel pellet 54. The first fuel pellet 51 contains the nuclear fuel without containing the gadolinium. The second fuel pellet 52 contains the nuclear fuel and 4 wt% (weight percent) of gadolinium. The third fuel pellet 53 contains the nuclear fuel and 6 wt% of gadolinium. The fourth fuel pellet 54 contains the nuclear fuel and 10 wt% of gadolinium. At this time, the nuclear fuel enrichment is uniform in each of the first to fourth fuel pellets 51, 52, 53, and 54. Therefore, for the first to fourth fuel pellets 51, 52, 53, and 54, it is possible to use nuclear fuels of a uniform enrichment without using nuclear fuels of a different enrichment. Although the nuclear fuel enrichment is uniform in each of the first to fourth fuel pellets 51, 52, 53, and 54 according to the first embodiment, it is not limited to this method, and different enrichments can also be used.

The first fuel rod 41 is a high-gadolinium fuel rod having a total weight of gadolinium larger than that of the second fuel rod 42. A fuel area 30a of the first fuel rod 41 is divided into a pair of low-gadolinium areas 60 in both upper and lower portions in the axial direction and a high-gadolinium area 61 in the center portion in the axial direction sandwiched by the low-gadolinium areas 60. The low-gadolinium area 60 in the upper end portion in the axial direction is divided into two areas. Therefore, the fuel area 30a of the first fuel rod 41 is divided into four areas in the axial direction: a first area 60a; a second area 60b; a third area 61; and a fourth area 60c from the upper portion in the axial direction. That is, the fuel area 30a of the first fuel rod 41 is constituted by the low-gadolinium area 60 including the first area 60a and the second area 60b, the high-gadolinium area 61 including the third area 61, and the low-gadolinium area 60 including the fourth area 60c.

In the first fuel rod 41, the first area 60a is constituted by the first fuel pellet 51, the second area 60b is constituted by the third fuel pellet 53, the third area 61 is constituted by the fourth fuel pellet 54, and the fourth area 60c is constituted by the third fuel pellet 53. Therefore, in the first fuel rod 41, the first area 60a does not contain gadolinium, the second area 60b contains 6 wt% of gadolinium, the third area 61 contains 10 wt% of gadolinium, and the fourth area 60c contains 6 wt% of gadolinium. With this configuration, gadolinium in the fuel area 30a of the first fuel rod 41 is distributed such that the content rate is increased from the end portions toward the center portion in the axial direction.

The second fuel rod 42 is a low-gadolinium fuel rod having a total weight of gadolinium smaller than that of the first fuel rod 41. A fuel area 30b of the second fuel rod 42 is divided into a pair of low-gadolinium areas 62 and 62 in both upper and lower portions in the axial direction and a high-gadolinium area 63 in the center portion in the axial direction sandwiched by the low-gadolinium areas 62 and 62. The low-gadolinium area 62 in the upper end portion in the axial direction is divided into two areas. Therefore, the fuel area 30b of the second fuel rod 42 is divided into four areas in the axial direction: a first area 62a; a second area 62b; a third area 63; and a fourth area 62c from the upper portion in the axial direction. That is, the fuel area 30b of the second fuel rod 42 is constituted by the low-gadolinium area 62 including the first area 62a and the second area 62b, the high-gadolinium area 63 including the third area 63, and the low-gadolinium area 62 including the fourth area 62c.

In the second fuel rod 42, the first area 62a is constituted by the first fuel pellet 51, the second area 62b is constituted by the second fuel pellet 52, the third area 63 is constituted by the third fuel pellet 53, and the fourth area 62c is constituted by the second fuel pellet 52. Therefore, in the second fuel rod 42, the first area 62a does not contain gadolinium, the second area 62b contains 4 wt% of gadolinium, the third area 63 contains 6 wt% of gadolinium, and the fourth area 62c contains 4 wt% of gadolinium. With this configuration, gadolinium in the fuel area 30b of the second fuel rod 42 is distributed such that the content rate is increased from the end portions toward the center portion in the axial direction.

The third fuel rod 43 is constituted by a fuel area 30c where the first fuel pellet 51 is arranged side by side in the axial direction. That is, the fuel area 30c of the third fuel rod 43 does not contain gadolinium.

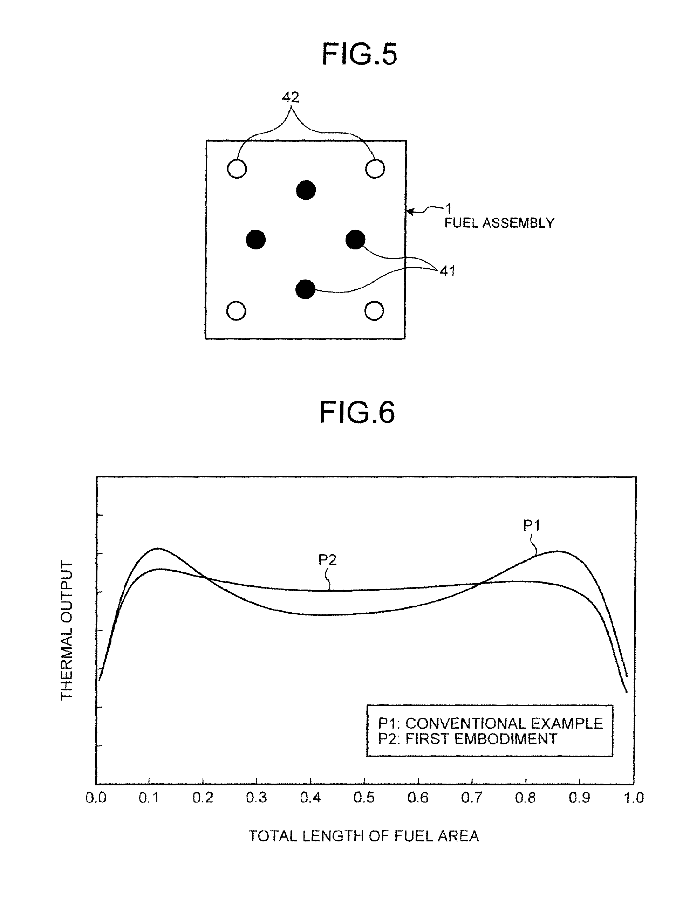

FIG. 5 is a schematic diagram for explaining a layout of the fuel rods with respect to the fuel assembly according to the first embodiment. When constituting the fuel assembly 1 with the first fuel rod 41, the second fuel rod 42, and the third fuel rod 43 configured in the above manner, a large percentage of the second fuel rod 42 that is the low-gadolinium fuel rod is loaded on an outer side of the fuel assembly 1 than the first fuel rod 41 that is the high-gadolinium fuel rod. FIG. 5 is an example of laying out the first fuel rod 41 and the second fuel rod 42, in which four second fuel rods 42 are loaded at four corners of the fuel assembly 1, and four first fuel rods 41 are respectively loaded between two adjacent second fuel rods 42. In addition, as the fuel rod 15 other than the first fuel rod 41 and the second fuel rod 42, the third fuel rod 43 is loaded.

The following descriptions explain the length of each of the areas 60a, 60b, 60c, and 61 and concentration difference of gadolinium in the first fuel rod 41 and the second fuel rod 42 that contain gadolinium. It is preferable that the length L1 of each of the low-gadolinium areas 60 and 62 in the first fuel rod 41 and the second fuel rod 42 be in a range of 9% to 25% of a total length L of each of the fuel areas 30a and 30b. When each of the low-gadolinium areas 60 and 62 is divided into two areas, it is preferable that the length L2 of the end side area in the axial direction (for example, the first areas 60a and 62a) be in a range of 2% to 8% of the total length L of each of the fuel areas 30a and 30b.

Specifically, when the total length L of each of the fuel areas 30a and 30b of the first fuel rod 41 and the second fuel rod 42 is 420 centimeters, it is preferable that the length L1 of each of the low-gadolinium areas 60 and 62 be in a range of 40 to 90 centimeters. In addition, when the low-gadolinium areas 60 and 62 are divided into the first areas 60a and 62a and the second areas 60b and 62b, respectively, it is preferable that the length L2 of each of the first areas 60a and 62a, which is a length from the end of each of the fuel areas 30a and 30b, be in a range of 10 to 30 centimeters. Similarly, when the total length L of each of the fuel areas 30a and 30b of the first fuel rod 41 and the second fuel rod 42 is 366 centimeters, it is preferable that the length L1 of each of the low-gadolinium areas 60 and 62 be in a range of 40 to 90 centimeters, and the length L2 of each of the first areas 60a and 62a be in a range of 10 to 30 centimeters.

Subsequently, upon explaining the concentration difference of gadolinium, it is preferable that the concentration of gadolinium in each of the high-gadolinium areas 61 and 63 of the first fuel rod 41 and the second fuel rod 42 be in a range of 4 wt% to 12 wt%. In addition, it is preferable that the concentration of gadolinium in each of the low-gadolinium areas 60 and 62 of the first fuel rod 41 and the second fuel rod 42 be lower than that in the high-gadolinium areas by 1 wt% to 4 wt%. Furthermore, when each of the low-gadolinium areas 60 and 62 is divided into two areas, it is preferable that the end side area in the axial direction (for example, the first areas 60a and 62a) be in a range of 0 wt% to 2 wt%. The gadolinium distribution in each of the first fuel rod 41 and the second fuel rod 42 in the first embodiment is the same as described above.

FIG. 6 is a graph of a comparison of power distributions between a conventional fuel assembly and a fuel assembly in which the fuel rod according to the first embodiment is loaded. In the graph shown in FIG. 6, the horizontal axis represents the total length L of the fuel area 30 of the fuel assembly 1 set to 1.0, and the vertical axis represents the thermal power of the fuel assembly 1. In the graph shown in FIG. 6, P1 indicates the thermal power of the conventional fuel assembly, and P2 indicates the thermal power of the fuel assembly 1 according to the first embodiment.

In the conventional fuel assembly in which the content amount of the burnable poison is constant along the axial direction, the nuclear reaction in the center portion of the fuel rod in the axial direction is higher than the nuclear reactions in the end portions in the axial direction at the initial state of the operation cycle for changing the fuel assembly in a predetermined cycle. Therefore, because the nuclear reactions in the end portions of the fuel assembly in the axial direction becomes higher than the nuclear reaction in the center portion in the axial direction at the later stage of the operation cycle, the curve indicated by P1 represents that the thermal power in the end portions in the axial direction are higher than the thermal power in the center portion in the axial direction.

On the other hand, in the fuel assembly 1 according to the first embodiment, the high-gadolinium areas 61 and 63 are arranged in the center portions of the first fuel rod 41 and the second fuel rod 42 in the axial direction, respectively, to control the nuclear reaction in the center portion of the fuel rod 15 in the axial direction. Therefore, at an initial stage of the operation cycle, the nuclear reaction in the center portion of the fuel rod 15 in the axial direction is lower than the nuclear reaction in the center portion of the conventional fuel rod in the axial direction. As a result, at the later stage of the operation cycle, because the nuclear reactions in the end portions of the fuel assembly 1 in the axial direction become comparable to the nuclear reaction in the center portion in the axial direction, the curve indicated by P2 represents that the thermal power in the end portions in the axial direction and the thermal power in the center portion in the axial direction become uniform, obtaining a flat power distribution along the axial direction.

With the above configuration, by distributing burnable poison such as gadolinium in the first fuel rod 41 and the second fuel rod 42 in such a manner that the content rate of the burnable poison is increased from the end portions in the axial direction toward the center portion, as shown in FIG. 6, it is possible to make the thermal power uniform along the axial direction of the fuel assembly 1. With this configuration, even when the operation cycle is lengthened, it is possible to reduce the difference between the nuclear reactions in the end portions in the axial direction and the nuclear reaction in the center portion in the axial direction at the later stage of the operation cycle. As a result, in the pressurized water reactor in which the fuel assembly 1 is loaded, it can be expected that a local increase of the thermal power due to lengthening the operation cycle is suppressed, making it possible to obtain nuclear fuel with high reliability considering the influence of a transient change event or an accidental event at the time of operating the reactor.

Furthermore, in the first embodiment, a large percentage of the second fuel rod 42 is loaded on an outer side of the fuel assembly 1 than the first fuel rod 41. Therefore, it is possible to make the thermal power uniform in a radial direction (in an axial cross section) of the fuel assembly 1, by which the thermal power of the fuel assembly 1 can be made uniform in a three dimensional manner.

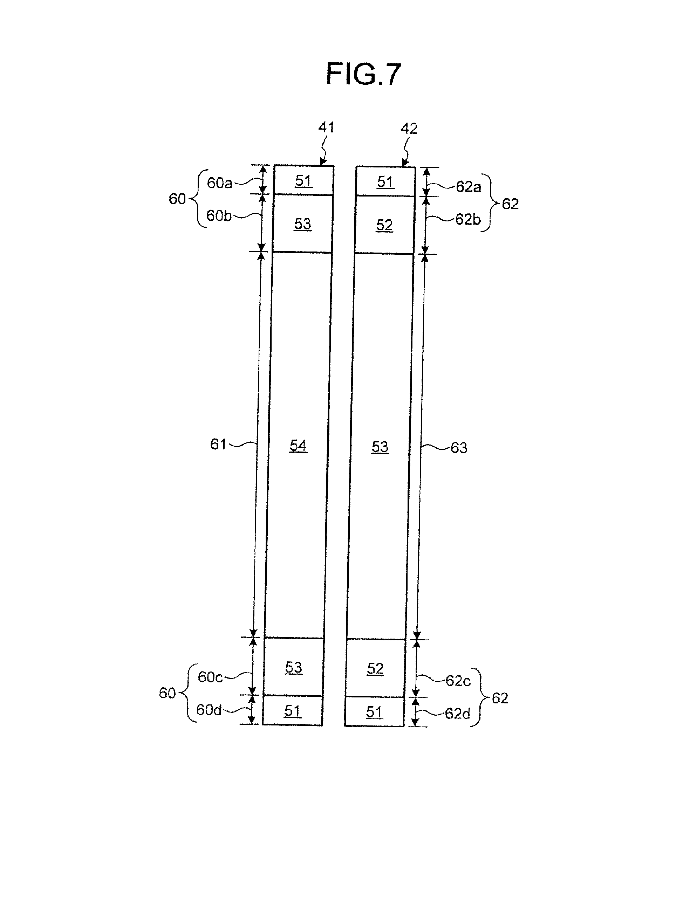

Moreover, although each of the fourth areas 60c and 62c, which are the low-gadolinium areas 60 and 62 on the lower side in the axial direction, respectively, is not divided in the first embodiment, as shown in FIG. 7, the low-gadolinium areas 60 and 62 on the lower side in the axial direction can be divided into the fourth areas 60c and 62c and fifth areas 60d and 62d, respectively. In this case, the fourth areas 60c and 62c can be configured as the second areas 60b and 62b, and the fifth areas 60d and 62d can be configured as the first areas 60a and 62a.

In addition, although gadolinium is used as the burnable poison in the first embodiment, boron (B), erbium (Er), or dysprosium (Dy) can be used instead. In this case, it is preferable to set the content rate of the burnable poison such that the thermal power of the fuel assembly 1 becomes uniform in the axial direction.

### [Second embodiment]

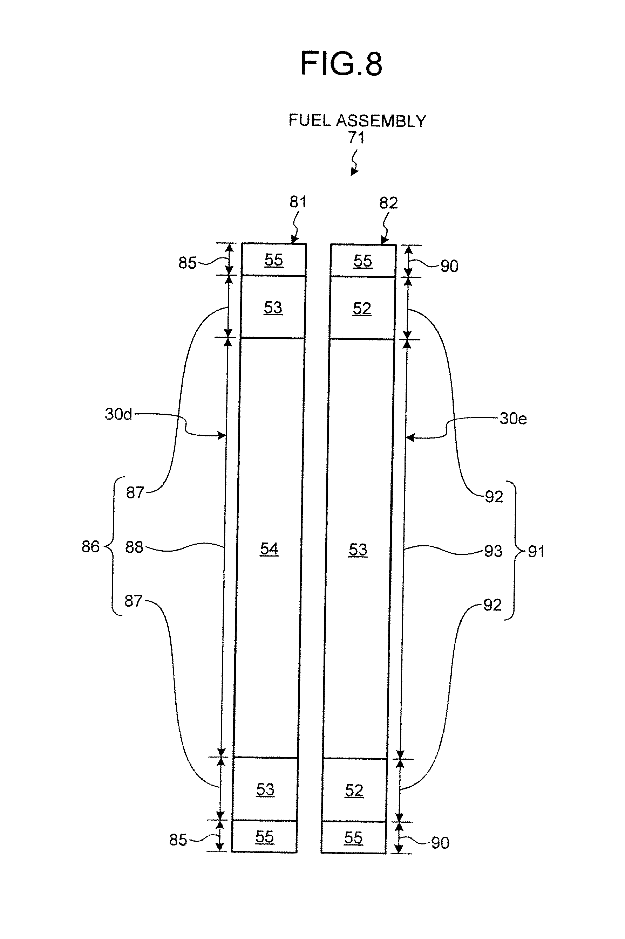

A fuel rod and a fuel assembly according to a second embodiment of the present invention are explained below with reference to FIG. 8. FIG. 8 is a schematic diagram of a distribution of burnable poison in the fuel rod according to the second embodiment. In order to avoid redundant explanations, only different portions are explained below. In the fuel assembly 1 according to the first embodiment, the nuclear fuel enrichment is set to be uniform in the first fuel rod 41 and the second fuel rod 42. However, in a fuel assembly 71 according to the second embodiment, the nuclear fuel enrichment of a first fuel rod 81 is different from that of a second fuel rod 82. The first fuel rod 81 and the second fuel rod 82 according to the second embodiment are explained below. Because the third fuel rod 43 according to the second embodiment has a configuration identical to that of the first embodiment, explanations thereof will be omitted.

The first fuel rod 81 is a high-gadolinium fuel rod, and a fuel area 30d of the first fuel rod 81 is divided into a pair of axial blanket areas 85 in both upper and lower portions in the axial direction and a main fuel area 86 in the center portion in the axial direction sandwiched by the axial blanket areas 85. The main fuel area 86 is divided into a pair of low-gadolinium areas 87 in the end portions of the main fuel area 86 in the axial direction and a high-gadolinium area 88 in the center portion in the axial direction sandwiched by the low-gadolinium areas 87. With this configuration, gadolinium in the main fuel area 86 of the first fuel rod 81 is distributed in the axial direction such that the content rate is increased from the end portions toward the center portion. That is, the fuel area 30d of the first fuel rod 81 is divided into five areas: the axial blanket area 85; the low-gadolinium area 87; the high-gadolinium area 88; the low-gadolinium area 87; and the axial blanket area 85 from the upper portion in the axial direction.

At this time, in the first fuel rod 81, the nuclear fuel enrichment of the axial blanket areas 85 is lower than that in the main fuel area 86. Furthermore, the gadolinium distribution in the first fuel rod 81 is the same as that in the first fuel rod 41 according to the first embodiment. In the axial blanket areas 85 of the first fuel rod 81 according to the second embodiment, a fifth fuel pellet 55 is used instead of the first fuel pellet 51 used in the first area 60a of the first fuel rod 41 according to the first embodiment. The fifth fuel pellet 55 contains nuclear fuel having an enrichment lower than that in the main fuel area 86 without containing gadolinium. In the first fuel rod 81, each of the axial blanket areas 85 is constituted by the fifth fuel pellet 55, and the low-gadolinium area 87 on the upper side in the axial direction is constituted by the third fuel pellet 53. The high-gadolinium area 88 is constituted by the fourth fuel pellet 54, and the low-gadolinium area 87 on the lower side in the axial direction is constituted by the third fuel pellet 53.

The second fuel rod 82 is a low-gadolinium fuel rod, and a fuel area 30e of the second fuel rod 82 is divided into a pair of axial blanket areas 90 in both upper and lower portions in the axial direction and a main fuel area 91 in the center portion in the axial direction sandwiched by the axial blanket areas 90. The main fuel area 91 is divided into a pair of low-gadolinium areas 92 in the end portions of the main fuel area 91 in the axial direction and a high-gadolinium area 93 in the center portion in the axial direction sandwiched by the low-gadolinium areas 92. With this configuration, gadolinium in the main fuel area 91 of the second fuel rod 82 is distributed in the axial direction such that the content rate is increased from the end portions toward the center portion. That is, the fuel area 30e of the second fuel rod 82 is divided into five areas: the axial blanket area 90; the low-gadolinium area 92; the high-gadolinium area 93; the low-gadolinium area 92; and the axial blanket area 90 from the upper portion in the axial direction.

At this time, in the second fuel rod 82, the nuclear fuel enrichment of the axial blanket areas 90 is lower than that in the main fuel area 91 as is the case in the first fuel rod 81. Furthermore, the gadolinium distribution in the second fuel rod 82 is the same as that in the second fuel rod 42 according to the first embodiment. In the axial blanket areas 90 of the second fuel rod 82 according to the second embodiment, the fifth fuel pellet 55 is used instead of the first fuel pellet 51 used in the first area 62a of the second fuel rod 42 according to the first embodiment. In the second fuel rod 82, each of the axial blanket areas 90 is constituted by the fifth fuel pellet 55, and the low-gadolinium area 92 on the upper side in the axial direction is constituted by the second fuel pellet 52. The high-gadolinium area 93 is constituted by the third fuel pellet 53, and the low-gadolinium area 92 on the lower side in the axial direction is constituted by the second fuel pellet 52.

With the above configuration, even with the first fuel rod 81 and the second fuel rod 82 provided with the axial blanket areas 85 and 90 having a low nuclear fuel enrichment, it is possible to make the thermal power of the fuel assembly 71 uniform along the axial direction, by distributing the burnable poison such as gadolinium in the main fuel area 91 in such a manner that the content rate of the burnable poison is increased from the end portions in the axial direction toward the center portion. With this configuration, even when the operation cycle is lengthened, it is possible to reduce the difference between the nuclear reactions in the end portions in the axial direction and the nuclear reaction in the center portion in the axial direction at the later stage of the operation cycle. As a result, also in the pressurized water reactor in which the fuel assembly 71 is loaded, it can be expected that a local increase of the thermal power due to lengthening the operation cycle is suppressed, making it possible to obtain nuclear fuel with high reliability considering an influence on a transient change event or an accidental event at the time of operating the reactor.

In addition, in the first and second embodiments, as long as the burnable poison is distributed in the first fuel rods 41 and 81 and the second fuel rods 42 and 82 in such a manner that the content rate of the burnable poison is increased from the end portions in the axial direction toward the center portion, each of the low-gadolinium areas 60, 62, 87, and 92 can be divided into a plurality of areas, and the high-gadolinium areas 61, 63, 88, and 93 can also be divided into a plurality of areas.

### [Industrial Applicability]

As described above, the fuel rod and the fuel assembly according to the present invention is suitable for a pressurized water reactor, and more particularly suitable for a case of lengthening an operation cycle of the fuel assembly.

### [Reference Signs List]

1 fuel assembly
5 control rod
6 incore nuclear instrumentation
10 cell
15 fuel rod
16 control-rod guide tube
17 incore-nuclear-instrumentation guide tube
18 grid
19 upper nozzle
20 lower nozzle
25 fuel pellet
26 clad tube
27 spring
41 first fuel rod
42 second fuel rod
43 third fuel rod
60 low-gadolinium area of first fuel rod
61 high-gadolinium area of first fuel rod
62 low-gadolinium area of second fuel rod
63 high-gadolinium area of second fuel rod
71 fuel assembly (second embodiment)
81 first fuel rod (second embodiment)
82 second fuel rod (second embodiment)
85 axial blanket area of first fuel rod
86 main fuel area of first fuel rod
87 low-gadolinium area of first fuel rod (second embodiment)
88 high-gadolinium area of first fuel rod (second embodiment)
90 axial blanket area of second fuel rod (second embodiment)
91 main fuel area of second fuel rod (second embodiment)
92 low-gadolinium area of first fuel rod (second embodiment)
93 low-gadolinium area of first fuel rod (second embodiment)
L total length of fuel area
L1 length of each of low-gadolinium area
L2 length of first area

## Claims

1. A fuel assembly of a pressurized water reactor, comprising:
a plurality of first fuel rods (41, 81), each first fuel rod containing burnable poison, and
a plurality of second fuel rods (42, 82), each second fuel rod containing a total weight of burnable poison lower than that of the first fuel rods (41, 81),
wherein a content rate of the burnable poison increases from both end portions toward a center portion in an axial direction of each of the first fuel rods (41, 81) and the second fuel rods (42, 82),
wherein the burnable poison is gadolinium,
wherein a high-gadolinium area (61, 63, 88, 93) is provided at the center portion of each of the first fuel rods (41, 81) and the second fuel rods (42, 82), the high-gadolinium area containing a concentration of gadolinium in a range of 4 to 12 wt%, and
wherein the plurality of second fuel rods (42, 82) is disposed closer to an outer side of the fuel assembly in an orthogonal plane perpendicular to an axial direction as compared to the plurality of first fuel rods (41, 81).

2. The fuel assembly of Claim 1, wherein an enrichment of each of the first fuel rods (41, 81) and the second fuel rods (42, 82) is uniform in an axial direction.

3. The fuel assembly of Claim 1, wherein each of the first fuel rods (41, 81) and the second fuel rods (42, 82) includes
a main fuel area (86; 91) arranged in a center portion in an axial direction; and
a pair of axial blanket areas (85; 90) respectively arranged in both end portions of the main fuel area (86; 91) in the axial direction, each of the axial blanket areas (85; 90) having an enrichment lower than that of the nuclear fuel in the main fuel area (86; 91), wherein
the content rate of the burnable poison is increased from the end portions toward the center portion in the main fuel area (86; 91) in the axial direction.

4. The assembly of Claim 3, wherein each of the first fuel rods (41, 81) and the second fuel rods (42, 82) includes:
a pair of low gadolinium areas (60, 62; 87, 92) respectively arranged in both end portions of the high gadolinium area (61, 63; 88, 93) in the axial direction, each of the low gadolinium areas (60, 62; 87, 92) having a gadolinium content rate lower than the gadolinium content rate of the high gadolinium area (61, 63; 88, 93), wherein
the gadolinium content rate in each of the low gadolinium areas (60, 62; 87, 92) is lower than the gadolinium content rate in the high gadolinium area (61, 63; 88, 93) by 1 wt% to 4 wt%.

5. The fuel assembly of Claim 3 or 4, wherein each of the first fuel rods (41, 81) and the second fuel rods (42, 82) includes:
a pair of low gadolinium areas (60, 62; 87, 92) respectively arranged in both end portions of the high gadolinium area (61, 63; 88, 93) in the axial direction, each of the low gadolinium areas (60, 62; 87, 92) having a gadolinium content rate lower than the gadolinium content rate of the high gadolinium area (61, 63; 88, 93), wherein
the length (L1) of each of the low gadolinium areas (60, 62; 87, 92) in the axial direction is within a range of 9% to 25% of a total length (L) of a fuel area containing the nuclear fuel in the axial direction.

## Patentansprüche

1. Brennelement eines Druckwasserreaktors, umfassend:
mehrere erste Brennstäbe (41, 81), wobei jeder erste Brennstab abbrennbares Gift enthält, und
mehrere zweite Brennstäbe (42, 82), wobei jeder zweite Brennstab ein Gesamtgewicht von abbrennbarem Gift enthält, das kleiner als das der ersten Brennstäbe (41, 81) ist,
wobei ein Gehaltsgrad des abbrennbaren Gifts von beiden Endabschnitten in Richtung eines Mittelabschnitts in einer axialen Richtung jedes der ersten Brennstäbe (41, 81) und der zweiten Brennstäbe (42, 82) zunimmt,
wobei das abbrennbare Gift Gadolinium ist,
wobei an dem Mittelabschnitt jedes der ersten Brennstäbe (41, 81) und der zweiten Brennstäbe (42, 82) ein gadoliniumreicher Bereich (61, 63, 88, 93) vorgesehen ist, wobei der gadoliniumreiche Bereich eine Gadoliniumkonzentration in einem Bereich von 4 bis 12 Gew.-% enthält, und
wobei die mehreren zweiten Brennstäbe (42, 82) in einer orthogonalen Ebene im rechten Winkel zu einer axialen Richtung verglichen mit den mehreren ersten Brennstäben (41, 81) näher bei einer Außenseite des Brennelements angeordnet sind.

2. Brennelement nach Anspruch 1, wobei eine Anreicherung von jedem der ersten Brennstäbe (41, 81) und der zweiten Brennstäbe (42, 82) in einer axialen Richtung gleichmäßig ist.

3. Brennelement nach Anspruch 1, wobei jeder der ersten Brennstäbe (41, 81) und der zweiten Brennstäbe (42, 82)
einen Hauptbrennstoffbereich (86; 91), der in einer axialen Richtung in einem Mittelabschnitt angeordnet ist, und
ein Paar von axialen Blanket-Bereichen (85; 90) umfasst, die in der axialen Richtung jeweils in beiden Endabschnitten des Hauptbrennstoffbereichs (86; 91) angeordnet sind, wobei jeder der axialen Blanket-Bereiche (85; 90) eine Anreicherung aufweist, die niedriger als jene des Kernbrennstoffs in dem Hauptbrennstoffbereich (86; 91) ist, wobei
der Gehaltsgrad des abbrennbaren Giftes in dem Hauptbrennstoffbereich (86; 91) in der axialen Richtung von den Endabschnitten in Richtung des Mittelabschnitts zunimmt.

4. Brennelement nach Anspruch 3, wobei jeder der ersten Brennstäbe (41, 81) und der zweiten Brennstäbe (42, 82) umfasst:
ein Paar von gadoliniumarmen Bereichen (60, 62; 87, 92), die in der axialen Richtung jeweils in beiden Endabschnitten des gadoliniumreichen Bereichs (61, 63; 88, 93) angeordnet sind, wobei jeder der gadoliniumarmen Bereiche (60, 62; 87, 92) einen Gadolinium-Gehaltsgrad aufweist, der niedriger als der Gadolinium-Gehaltsgrad des gadoliniumreichen Bereichs (61, 63; 88, 93) ist, wobei
der Gadolinium-Gehaltsgrad in jedem der gadoliniumarmen Bereiche (60, 62; 87, 92) um 1 Gew.-% bis 4 Gew.-% niedriger als der Gadolinium-Gehaltsgrad in dem gadoliniumreichen Bereich (61, 63; 88, 93) ist.

5. Brennelement nach Anspruch 3 oder 4, wobei jeder der ersten Brennstäbe (41, 81) und der zweiten Brennstäbe (42, 82) umfasst:
ein Paar von gadoliniumarmen Bereichen (60, 62; 87, 92), die in der axialen Richtung jeweils in beiden Endabschnitten des gadoliniumreichen Bereichs (61, 63; 88, 93) angeordnet sind, wobei jeder der gadoliniumarmen Bereiche (60, 62; 87, 92) einen Gadolinium-Gehaltsgrad aufweist, der niedriger als der Gadolinium-Gehaltsgrad des gadoliniumreichen Bereichs (61, 63; 88, 93) ist, wobei
die Länge (L1) von jedem der gadoliniumarmen Bereiche (60, 62; 87, 92) in der axialen Richtung innerhalb eines Bereichs von 9 % bis 25 % einer Gesamtlänge (L) eines den Kernbrennstoff enthaltenden Brennstoffbereichs in der axialen Richtung ist.

## Revendications

1. Assemblage de combustible d'un réacteur à eau pressurisée, comprenant :
une pluralité de premiers crayons de combustible (41, 81), chaque premier crayon de combustible contenant un poison consommable, et
une pluralité de seconds crayons de combustible (42, 82), chaque second crayon de combustible contenant une masse totale de poison consommable inférieure à celle des premiers crayons de combustible (41, 81),
dans lequel une teneur du poison consommable augmente à partir des deux portions d'extrémité vers une portion centrale dans une direction axiale de chacun des premiers crayons de combustible (41, 81) et des seconds crayons de combustible (42, 82),
dans lequel le poison consommable est le gadolinium,
dans lequel une zone à teneur élevée en gadolinium (61, 63, 88, 93) est fournie dans la portion centrale de chacun des premiers crayons de combustible (41, 81) et des seconds crayons de combustible (42, 82), la zone à teneur élevée en gadolinium contenant une concentration en gadolinium dans un intervalle de 4 à 12 % en poids, et
dans lequel la pluralité des seconds crayons de combustible (42, 82) est disposée à proximité d'un côté externe de l'assemblage de combustible dans un plan orthogonal perpendiculaire à une direction axiale en comparaison avec la pluralité de premiers crayons de combustible (41, 81).

2. Assemblage de combustible selon la revendication 1, dans lequel un enrichissement de chacun des premiers crayons de combustible (41, 81) et des seconds crayons de combustible (42, 82) est uniforme dans une direction axiale.

3. Assemblage de combustible selon la revendication 1, dans lequel chacun des premiers crayons de combustible (41, 81) et des seconds crayons de combustible (42, 82) comprend
une zone de combustible principale (86 ; 91) disposée dans une portion centrale dans une direction axiale ; et,
une paire de zones protectrices axiales (85 ; 90) respectivement disposée dans les deux portions d'extrémité de la zone de combustible principale (86 ; 91) dans la direction axiale, chacune des zones protectrices axiales (85 ; 90) présentant un enrichissement inférieur à celui du combustible nucléaire dans la zone de combustible principale (86 ; 91), dans lequel
la teneur du poison consommable est augmenté à partir des portions d'extrémité vers la portion centrale dans la zone de combustible principale (86 ; 91) dans la direction axiale.

4. Assemblage selon la revendication 3, dans lequel chacun des premiers crayons de combustible (41, 81) et des seconds crayons de combustible (42, 82) comprend :
une paire de zones à faible teneur en gadolinium (60, 62 ; 87, 92) respectivement disposées dans les deux portions d'extrémité de la zone à teneur élevée en gadolinium (61, 63 ; 88, 93) dans la direction axiale, chacune des zones à faible teneur en gadolinium (60, 62 ; 87, 92) présentant une teneur en gadolinium inférieure à la teneur en gadolinium de la zone à teneur élevée en gadolinium (61, 63 ; 88, 93) dans lequel
la teneur en gadolinium dans chacune des zones à faible teneur en gadolinium (60, 62 ; 87, 92) est inférieure à la teneur en gadolinium dans la zone à teneur élevée en gadolinium (61, 63 ; 88, 93) de 1 % en poids à 4 % en poids.

5. Assemblage de combustible selon la revendication 3 ou 4, dans lequel chacun des premiers crayons de combustible (41, 81) et des seconds crayons de combustible (42, 82) comprend :
une paire de zones à faible teneur en gadolinium (60, 62 ; 87, 92) respectivement disposée dans les deux portions d'extrémité de la zone à teneur élevée en gadolinium (61, 63 ; 88, 93) dans la direction axiale, chacune des zones à faible teneur en gadolinium (60, 62 ; 87, 92) présentant une teneur en gadolinium inférieure à la teneur en gadolinium de la zone à teneur élevée en gadolinium (61, 63 ; 88, 93), dans lequel
la longueur (L1) de chacune des zones à faible teneur en gadolinium (60, 62 ; 87, 92) dans la direction axiale se trouve dans un intervalle de 9 % à 25 % d'une longueur totale (L) d'une zone de combustible contenant le combustible nucléaire dans la direction axiale.
